# FASCICULE DE BREVET EUROPEEN

(11) **EP 3 877 772 B1**
(45) Date de publication et mention de la délivrance du brevet: **18.06.2025**
(21) Numéro de dépôt: 19818214.9
(22) Date de dépôt: 05.11.2019
(51) Int. Cl.: G01R 19/32, H05B 1/02

(54) **PROCÉDÉ DE DÉTECTION DE SURCHAUFFE POUR DISPOSITIF DE CHAUFFAGE ET UNITÉ DE COMMANDE CORRESPONDANTE**
VERFAHREN ZUR ERKENNUNG EINER ÜBERHITZUNG EINER HEIZVORRICHTUNG UND ENTSPRECHENDE STEUEREINHEIT
METHOD FOR DETECTING OVERHEATING OF A HEATING DEVICE, AND CORRESPONDING CONTROL UNIT

(30) Priorité: 06.11.2018 FR 1860226
(43) Date de publication de la demande: 15.09.2021
(73) Titulaire: Valeo Systemes Thermiques, 78322 Le Mesnil Saint-Denis (FR)
(72) Inventeur: GOGMOS, Erwan, 78322 LE MESNIL SAINT-DENIS CEDEX (FR); PUZENAT, Bertrand, 78322 LE MESNIL SAINT-DENIS CEDEX (FR)
(74) Mandataire: Valeo Systèmes Thermiques
(86) Numéro de dépôt international: PCT/FR2019/052616
(87) Numéro de publication internationale: WO 2020/094969

(56) Documents cités:
- EP-A1- 2 772 820
- WO-A1-2018/142064
- DE-A1- 102007 009 731
- DE-A1- 102016 109 039
- DE-A1- 102016 216 295
- JP-A- 2007 059 097
- KR-A- 20100 130 820
- US-A1- 2015 122 899

## Description

L'invention concerne la détection de surchauffe d'un dispositif de chauffage électrique pour chauffer un fluide. De façon non limitative, le dispositif de chauffage électrique peut être configuré pour chauffer par exemple un flux d'air destiné à traverser le dispositif de chauffage. L'invention peut s'appliquer aussi bien pour un dispositif de chauffage électrique haute tension que pour un dispositif de chauffage électrique basse tension.

L'invention s'applique notamment à une installation de chauffage et/ou ventilation et/ou climatisation pour véhicule automobile comprenant un tel dispositif de chauffage.

Un véhicule automobile est couramment équipé d'une telle installation de chauffage et/ou ventilation et/ou climatisation qui est destinée à réguler les paramètres aérothermiques d'un flux d'air destiné à être distribué dans l'habitacle, en particulier la température du flux d'air. Pour ce faire, l'installation comprend dans sa généralité un ou plusieurs dispositifs de traitement thermique, dont notamment un dispositif de chauffage électrique, autrement appelé radiateur électrique, pour le chauffage d'un fluide tel qu'un flux d'air.

Le dispositif de chauffage électrique comporte des modules chauffants électriques. À titre d'exemple, les modules chauffants électriques peuvent être disposés de manière à être exposés directement à un flux d'air traversant le dispositif de chauffage électrique.

Selon une solution connue, les modules chauffants comportent des éléments résistifs par exemple à coefficient de température positif (CTP), tels que des pierres CTP.

Il s'agit d'éléments dont la valeur résistive varie très fortement en fonction de la température. Plus précisément, la valeur ohmique des éléments résistifs CTP croît très rapidement au-delà d'un seuil de température prédéterminé.

Les éléments résistifs peuvent être alimentés par une source de tension électrique embarquée, à savoir des batteries. Un connecteur électrique relié à la source de tension embarquée sur le véhicule peut être prévu pour amener la puissance électrique nécessaire à l' alimentation du dispositif de chauffage électrique, notamment des éléments résistifs. En outre, les éléments résistifs sont commandés par une unité électronique de commande qui comporte généralement un circuit d'alimentation électrique. Le circuit d'alimentation électrique est monté par exemple sur une carte à circuit imprimé.

En particulier dans le cas d'un dispositif de chauffage électrique haute tension, il peut s'agir d'un dispositif de chauffage principal du véhicule et qui peut donc être très puissant.

En cas de surchauffe, le dispositif peut atteindre en au moins un point une température limite pour le bon fonctionnement du système. Les pierres CTP servent de protection contre une forte surchauffe pouvant générer par exemple un incendie, permettant ainsi de garantir la sécurité des passagers.

Toutefois, certains composants proches du dispositif de chauffage électrique, comme par exemple des parties plastiques de l'installation de chauffage et/ou ventilation et/ou climatisation, peuvent être plus sensibles notamment dans certaines conditions, par exemple dans le cas d'une température élevée alors que les volets de l'installation de chauffage et/ou ventilation et/ou climatisation sont fermés, volontairement ou en raison d'une défaillance mécanique non détectée.

Il est donc intéressant de contrôler la température du dispositif de chauffage électrique, afin d'éviter de dégrader les composants alentours.

À cet effet, il est connu de prévoir un capteur additionnel tel qu'une sonde thermique qui peut mesurer directement la température du dispositif de chauffage électrique. Une telle sonde thermique peut par exemple être agencée au contact des modules chauffants ou au niveau de l'unité électronique de commande, notamment de la carte à circuit imprimé. En fonction de la température relevée, on peut couper la puissance électrique ou la limiter.

Cependant, l'agencement de ce capteur additionnel qui mesure directement la température engendre un coût supplémentaire, nécessite de la place supplémentaire sur la carte à circuit imprimé et rajoute du poids au dispositif de chauffage électrique. Par ailleurs la détection d'une surchauffe par ce biais dépend de la distance entre le capteur et les éléments résistifs, et d'une manière générale de l'inertie du système. De plus, cela ajoute une possibilité de défaillance supplémentaire en cas de panne par exemple du capteur additionnel.

Les documents DE102016109039 et JP2007059097 divulguent également des dispositifs de contrôle de radiateurs électriques.

L'invention a pour objectif de pallier au moins partiellement ces inconvénients de l'art antérieur en proposant une solution alternative permettant de détecter une surchauffe du dispositif de chauffage électrique.

À cet effet, l'invention a pour objet un procédé de détection de surchauffe pour un dispositif de chauffage électrique comportant une pluralité d'éléments résistifs configurés pour être alimentés électriquement par une source de tension électrique, dans lequel l'alimentation électrique des éléments résistifs est pilotée à l'aide d'un signal de pilotage par modulation de largeur d'impulsions en fonction d'une consigne de puissance, ou de température ou de résistance ou d'intensité de courant électrique. Ledit procédé comprend les étapes suivantes :
vérifier si au moins un critère dudit dispositif est représentatif d'un état froid dudit dispositif, et inhiber au moins l'étape de détection de surchauffe suivante lorsque ledit au moins un critère est représentatif d'un état froid,
relever ladite consigne,
relever le rapport cyclique du signal de pilotage par modulation de largeur d'impulsions du nombre prédéfini d'éléments résistifs,
définir une valeur seuil de détection de rapport cyclique du signal de pilotage par modulation de largeur d'impulsions du nombre prédéfini d'éléments résistifs, la valeur seuil de détection étant représentative d'une surchauffe du dispositif de chauffage électrique, en fonction de la tension d'alimentation mesurée et/ou de ladite consigne, ou d'une valeur d'au moins un paramètre pour la surveillance d'une surchauffe du dispositif de chauffage électrique,
comparer la valeur dudit rapport cyclique relevée à la valeur seuil de détection, et détecter une surchauffe lorsque la valeur relevée dudit rapport cyclique atteint ladite valeur seuil de détection de rapport cyclique définie.

Ledit procédé peut en outre comporter une ou plusieurs caractéristiques suivantes, prises séparément ou en combinaison.

Selon un mode de réalisation préféré, ledit procédé comportant une étape supplémentaire pour mesurer la valeur de l'intensité du courant électrique parcourant un nombre prédéfini d'éléments résistifs.

Ledit au moins un paramètre pour la surveillance d'une surchauffe du dispositif de chauffage électrique peut être fonction de l'intensité du courant électrique. Ledit procédé peut comprendre une étape supplémentaire pour calculer la valeur dudit au moins un paramètre lorsque ledit au moins un paramètre est différent de l'intensité du courant électrique.

Selon un mode de réalisation, le procédé comprend une étape pour mesurer la tension d'alimentation.

Selon ce mode de réalisation, la valeur seuil de détection de rapport cyclique du signal de pilotage par modulation de largeur d'impulsions du nombre prédéfini d'éléments résistifs peut également être déterminée en fonction de la tension d'alimentation mesurée.

De préférence, l'alimentation électrique est fonction d'une consigne de puissance.

La consigne de puissance peut elle-même être fonction d'une consigne de température.

Ladite valeur seuil de détection peut être définie en fonction de la consigne de puissance ou de la consigne de température.

Le procédé peut comprendre une étape supplémentaire pour calculer la valeur dudit au moins un paramètre, lorsque ledit au moins un paramètre est différent de l'intensité du courant électrique.

Selon un aspect de l'invention, la valeur dudit au moins un paramètre peut être calculée à partir de l'intensité du courant électrique parcourant le nombre prédéfini d'éléments résistifs mesurée et éventuellement de la tension d'alimentation mesurée.

En variante ou en complément, la valeur dudit au moins un paramètre est calculée à partir dudit rapport cyclique relevé.

Ledit au moins un paramètre peut être choisi parmi la résistance électrique du nombre prédéfini d'éléments résistifs, l'intensité du courant électrique parcourant le nombre prédéfini d'éléments résistifs, un multiple ou une puissance de l'intensité du courant électrique parcourant le nombre prédéfini d'éléments résistifs, et la puissance électrique du nombre prédéfini d'éléments résistifs.

Selon une variante de réalisation, les éléments résistifs sont du type à coefficient de température positif. Selon une autre variante de réalisation, les éléments résistifs sont du type à coefficient de température négatif.

Selon un autre aspect de l'invention, l'intensité du courant électrique mesurée est l'intensité du courant électrique instantané parcourant le nombre prédéfini d'éléments résistifs, lorsque le signal de pilotage par modulation de largeur d'impulsions est de 100%.

Ledit procédé comporte les étapes suivantes : vérifier si au moins un critère dudit dispositif est représentatif d'un état froid dudit dispositif, et inhiber au moins l'étape de détection de surchauffe lorsque ledit au moins un critère est représentatif d'un état froid.

Selon un autre aspect de l'invention, au moins deux sous-ensembles d'éléments résistifs distincts sont pilotés de façon indépendante par modulation de largeur d'impulsions l'alimentation électrique. Pour chaque sous-système, on peut calculer de façon indépendante une valeur dudit au moins un paramètre choisi. En variante ou en complément, on peut définir de façon indépendante une valeur seuil de détection de rapport cyclique du signal de pilotage, selon la nature et/ou le nombre des éléments résistifs du sous-ensemble.

L'invention concerne également une unité de commande pour un dispositif de chauffage électrique comportant une pluralité d'éléments résistifs configurés pour être alimentés électriquement par une source de tension électrique, l'unité de commande étant configurée pour générer un signal de pilotage par modulation de largeur d'impulsions de l'alimentation électrique des éléments résistifs en fonction d'une consigne de puissance, ou de température, ou de résistance, ou d'intensité de courant électrique. L'unité de commande comporte au moins un moyen de traitement pour :
vérifier si au moins un critère dudit dispositif est représentatif d'un état froid dudit dispositif, et inhiber au moins l'étape de détection de surchauffe suivante lorsque ledit au moins un critère est représentatif d'un état froid,
relever ladite consigne,
relever le rapport cyclique du signal de pilotage par modulation de largeur d'impulsions du nombre prédéfini d'éléments résistifs,
définir une valeur seuil de détection de rapport cyclique du signal de pilotage par modulation de largeur d'impulsions du nombre prédéfini d'éléments résistifs, la valeur seuil de détection étant représentative d'une surchauffe du dispositif de chauffage électrique, en fonction de la tension d'alimentation mesurée et/ou de ladite consigne, ou d'une valeur d'au moins un paramètre pour la surveillance d'une surchauffe du dispositif de chauffage électrique, comparer la valeur dudit rapport cyclique relevée à la valeur seuil de détection, et
détecter une surchauffe lorsque la valeur relevée dudit rapport cyclique atteint ladite valeur seuil de détection de rapport cyclique définie.

D'autres caractéristiques et avantages de l'invention apparaitront plus clairement à la lecture de la description suivante, donnée à titre d'exemple illustratif et non limitatif, et des dessins annexés parmi lesquels :
La Figure 1a montre un organigramme de différentes étapes du procédé de détection selon un premier mode de réalisation.
La Figure 1b montre un organigramme de différentes étapes du procédé de détection selon un deuxième mode de réalisation.
La Figure 2 est un graphique représentant de façon schématique un exemple d'évolution de la puissance électrique et du rapport cyclique de signal de pilotage par modulation de largeur d'impulsions en cas de baisse de débit d'air.

Dans ces figures, les éléments identiques portent les mêmes références.

Les réalisations suivantes sont des exemples. Bien que la description se réfère à un ou plusieurs modes de réalisation, ceci ne signifie pas nécessairement que chaque référence concerne le même mode de réalisation, ou que les caractéristiques s'appliquent seulement à un seul mode de réalisation. De simples caractéristiques de différents modes de réalisation peuvent également être combinées ou interchangées pour fournir d'autres réalisations.

L'invention est du domaine d'une installation de chauffage et/ou ventilation et/ou climatisation destinée à équiper un véhicule automobile pour réguler les paramètres aérothermiques du flux d'air distribué dans une ou plusieurs zones de l'habitacle du véhicule.

L'invention concerne plus particulièrement un dispositif de chauffage électrique, autrement appelé radiateur électrique, pour véhicule automobile, équipant notamment une telle installation. Il s'agit d'un dispositif de chauffage électrique d'un fluide. De façon non limitative, il peut s'agir d'un dispositif de chauffage d'un flux d'air. Par la suite, la description est faite en référence à un flux d'air, mais l'invention peut s'appliquer à un autre fluide.

En particulier, il peut s'agir d'un dispositif de chauffage électrique ou radiateur haute-tension. On définit ici par haute tension, une tension supérieure à 90V ou 120V. En variante, il peut s'agir d'un radiateur basse tension.

Le dispositif de chauffage électrique est apte à transformer l'énergie électrique prélevée par exemple sur le véhicule en énergie thermique restituée dans l'air traversant l'installation de chauffage et/ou ventilation et/ou climatisation 1.

Le dispositif de chauffage électrique peut comporter un nombre prédéfini de modules chauffants. Ces modules chauffants peuvent être agencés de manière à être exposés directement au flux d'air traversant le dispositif de chauffage électrique.

Plus précisément, les modules chauffants peuvent comprendre chacun des éléments résistifs de type à coefficient de température positif (CTP). Les éléments résistifs sont par exemple réalisés sous la forme de pierres céramiques à effet CTP. En variante, il peut s'agir d'éléments résistifs de type à coefficient de température négatif (CTN).

Le dispositif de chauffage électrique comprend généralement en outre une unité électronique de commande pour commander les modules chauffants. Une telle unité de commande comporte un ou plusieurs composants électroniques et/ou électriques. L'unité de commande comporte notamment un circuit d'alimentation électrique (non représenté) des éléments résistifs. Le circuit d'alimentation électrique est monté par exemple sur un support de circuit électrique tel qu'une carte à circuit imprimé connue sous le sigle PCB en anglais pour « Printed Circuit Board ».

À titre d'exemple, le circuit d'alimentation électrique comporte des transistors (non représentés), chacun permettant d'autoriser ou non le passage du courant dans un nombre prédéfini de modules chauffants.

Les éléments résistifs sont destinés à être alimentés par une source d'alimentation électrique (non représentée), telle que des batteries, en provenance par exemple du véhicule. L'alimentation électrique des éléments résistifs est pilotée par modulation de largeur d'impulsions connue sous le sigle MLI ou PWM pour Pulse Width Modulation en anglais. L'unité de commande est configurée pour générer un signal de pilotage par modulation de largeur d'impulsions de l'alimentation électrique des éléments résistifs. Au moins deux sous-ensembles distincts d'éléments résistifs peuvent être pilotés de façon indépendante par modulation de largeur d'impulsions. L'alimentation électrique des éléments résistifs peut se faire en fonction d'une consigne de puissance électrique. Le dispositif est contrôlé en boucle fermée. En variante, l'alimentation électrique des éléments résistifs peut se faire en fonction d'une consigne de température, ou éventuellement de résistance, ou encore d'intensité de courant électrique.

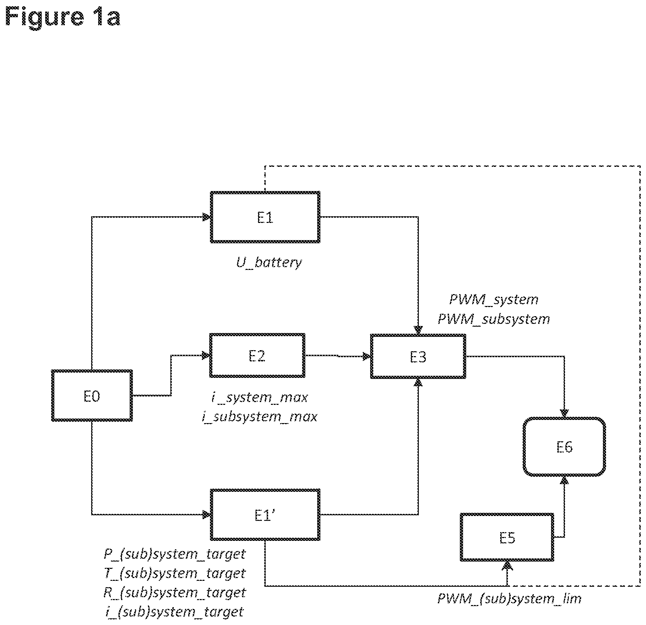

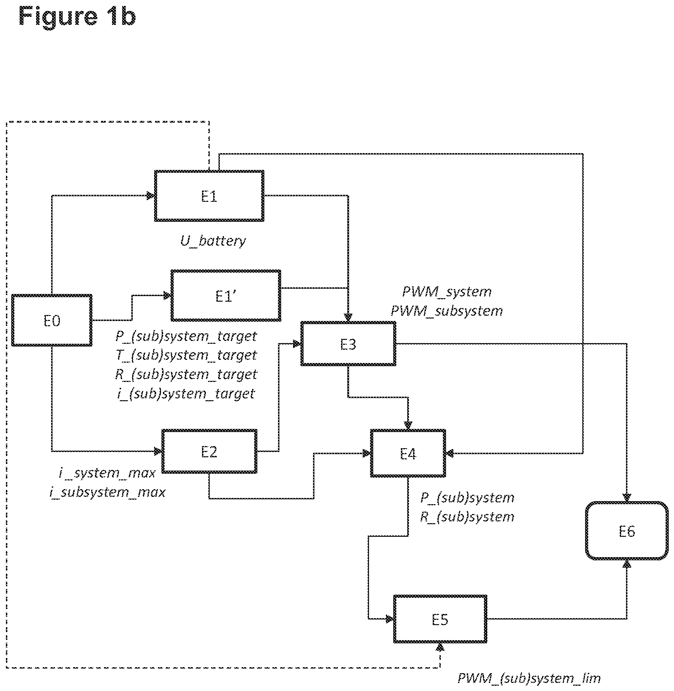

En se référant à la figure 1a ou figure 1b, on décrit un procédé de détection de surchauffe pour un tel dispositif de chauffage électrique, permettant de détecter en temps réel une éventuelle surchauffe de ce dispositif.

Il est possible de faire ce contrôle pour tous les modules chauffants, ou indépendamment pour chaque sous-ensemble de modules chauffants commandé par un transistor ou plusieurs transistors. Ceci permet notamment de détecter différents points chauds par exemple lorsque le dispositif de chauffage électrique équipe une installation de chauffage et/ou ventilation et/ou climatisation dite multi-zones, et que dans ce cas les modules chauffants peuvent être dédiés au chauffage de zones distinctes de l'habitacle.

Selon une variante de réalisation, on peut prévoir une étape E0 d'activation ou d'initialisation du procédé.

De façon générale, le procédé comprend une étape E1' pour relever la consigne. De préférence, il s'agit d'une consigne de puissance P_(sub)system_target. Il pourrait aussi s'agir d'une consigne de température T_(sub)system_target, ou éventuellement de résistance R_(sub)system_target, ou encore d'intensité i_(sub)system_target. Le préfixe « sub » est écrit entre parenthèse pour signifier que la consigne concerne un sous-système, respectivement l'ensemble des éléments résistifs.

Le procédé peut comprendre également une étape E1 dans laquelle on relève ou mesure la tension d'alimentation U_battery. Cette étape E1 peut être mise en œuvre par un capteur de mesure de tension. La tension d'alimentation U_battery peut être constante.

Le procédé peut comprendre une étape E2, dans laquelle on relève ou mesure la valeur de l'intensité i_system_max ou i_subsystem_max du courant électrique parcourant un nombre prédéfini d'éléments résistifs voire l'ensemble des éléments résistifs du dispositif de chauffage électrique. Il s'agit de relever la consommation de courant du ou des modules chauffants d'un sous-ensemble dont on veut surveiller un paramètre. On mesure par exemple le courant instantané qui parcourt les éléments résistifs. Cette étape E2 peut être mise en œuvre par un capteur de mesure de courant.

Le courant mesuré est par exemple le courant instantané maximum ou au niveau d'un pic, lorsque le signal de pilotage par modulation de largeur d'impulsions est à 100%.

À l'étape E3, on relève le rapport cyclique du signal de pilotage par modulation de largeur d'impulsions du nombre prédéfini d'éléments résistifs PWM_system ou PWM _subsystem. Dans la suite de la description, on désigne par PWM_(sub)system avec « sub » entre parenthèse, le rapport cyclique du signal de pilotage par modulation de largeur d'impulsions pour un sous-système, respectivement pour l'ensemble des éléments résistifs.

Le procédé peut comprendre une étape E4 (voir figure 1b), dans laquelle on calcule la valeur d'au moins un paramètre pour la surveillance d'une surchauffe du dispositif de chauffage électrique.

Avantageusement, ce paramètre est fonction de l'intensité du courant électrique parcourant le nombre prédéfini d'éléments résistifs i_subsystem_max, voire l'ensemble des éléments résistifs i_system_max, pour la surveillance d'une surchauffe du dispositif de chauffage électrique. Cette étape E4 peut être mise en œuvre par un moyen de traitement tel qu'un calculateur. Il peut s'agir de la valeur réelle du paramètre.

La valeur du paramètre peut être calculée à partir de l'intensité du courant électrique i_system_max ; i_subsystem_max parcourant le nombre prédéfini d'éléments résistifs mesurée à l'étape E2. La tension d'alimentation U_battery mesurée à l'étape E1, lorsque cette étape E1 est mise en œuvre, peut en outre être prise en compte dans le calcul de l'étape E4.

En variante ou en complément, un ou le paramètre peut être fonction de la valeur relevée du rapport cyclique du signal de pilotage par modulation de largeur d'impulsions du nombre prédéfini d'éléments résistifs PWM _(sub)system.

On peut réaliser cette étape E4 pour un ou plusieurs sous-systèmes, c'est-à-dire pour un ou plusieurs ensembles de modules chauffants commandés par un ou plusieurs transistors, ou pour tout le système c'est-à-dire l'ensemble des éléments résistifs pour tous les modules chauffants.

Le paramètre peut être la résistance électrique du nombre prédéfini d'éléments résistifs R_system ; R_subsystem, la puissance électrique du nombre prédéfini d'éléments résistifs P_system ; P_subsystem, l'intensité du courant électrique parcourant le nombre prédéfini d'éléments résistifs i_system_max ; i_subsystem_max, un multiple ou une puissance de l'intensité du courant électrique parcourant le nombre prédéfini d'éléments résistifs. En particulier, l'étape de calcul E4 est mise en œuvre lorsque le paramètre choisi n'est pas l'intensité du courant électrique.

En alternative, le paramètre peut ne pas être fonction de l'intensité du courant électrique. Il peut s'agir par exemple de la température des éléments résistifs.

Plusieurs paramètres peuvent être utilisés de façon complémentaire pour la surveillance d'une surchauffe du dispositif de chauffage électrique lors de la mise en œuvre du procédé.

À l'étape E5, on définit une valeur seuil de détection de rapport cyclique du signal de pilotage par modulation de largeur d'impulsions du nombre prédéfini d'éléments résistifs PWM_(sub)system_lim, la valeur seuil de détection étant représentative d'une surchauffe du dispositif de chauffage électrique.

Cette valeur seuil de détection dudit de rapport cyclique PWM_(sub)system_lim peut être définie en fonction de la consigne, de préférence la consigne de puissance P_(sub)system_target, relevée à l'étape E1', comme schématisé sur la figure 1a.

En variante, lorsque l'étape E1 est mise en œuvre au préalable, la valeur seuil de détection PWM _(sub)system_lim peut être définie en fonction du couple de la tension d'alimentation U_battery mesurée E1 et de la consigne, de préférence la consigne de puissance P_(sub)system_target, relevée à l'étape E1'. Dans ce cas, à la fois l'étape E1 et l'étape E1' sont mises en œuvre au préalable, comme schématisé par la flèche en pointillés entre E1 et E5 et la flèche en trait plein entre E1' et E5 sur la figure 1a.

Encore en variante, la valeur seuil de détection de rapport cyclique PWM_(sub)system_lim peut être définie en fonction de la valeur du paramètre choisi calculée à l'étape E4, comme schématisé sur la figure 1b, ou de la valeur de l'intensité de courant électrique relevée à l'étape E2.

La valeur seuil de détection peut aussi être définie en fonction du couple de la tension d'alimentation U_battery mesurée à l'étape E1 et de la valeur du paramètre choisi qui a été calculée à l'étape E4. Dans ce cas, à la fois l'étape E1 et l'étape E4 sont mises en œuvre au préalable, comme schématisé par la flèche en pointillés entre E1 et E5 et la flèche en trait plein entre E4 et E5 sur la figure 1b. La valeur seuil de détection peut aussi être définie en fonction du couple de la tension d'alimentation U_battery mesurée à l'étape E1 et de la valeur de l'intensité de courant électrique relevée à l'étape E2.

Lors d'une étape E6, on compare la valeur relevée du rapport cyclique PWM_(sub)system à l'étape E3 à la valeur seuil de détection PWM_(sub)system_lim) définie à l'étape E5 ou prédéterminée.

Cette étape E6 peut être mise en œuvre par un moyen de traitement tel qu'un comparateur. En fonction du résultat de comparaison, on peut détecter une surchauffe. Autrement dit, si la valeur relevée du rapport cyclique atteint ou dépasse la valeur seuil de détection de rapport cyclique définie, cela correspond à une surchauffe du dispositif. La valeur relevée du rapport cyclique peut dépasser la valeur seuil de détection, en étant supérieure ou inférieure, selon la nature de ce paramètre et selon la nature des éléments résistifs. Dans ce cas, une ou plusieurs actions contre cette surchauffe, non détaillées par la suite, peuvent être mises en œuvre. Dans le cas contraire, les étapes du procédé peuvent être réitérées jusqu'à la détection d'une surchauffe à l'étape E6.

Lorsque le procédé prend en compte un ou plusieurs paramètres, selon une première approche, un ou le paramètre peut être la résistance électrique des modules chauffants. On peut calculer dans ce cas à l'étape E4 une valeur de résistance électrique du nombre prédéfini d'éléments résistifs R_system ; R_subsystem à partir de la tension d'alimentation U_battery et de l'intensité du courant électrique i_system_max ; i_subsystem_max mesurées. Dans la suite de la description, on désigne par R_(sub)system avec « sub » entre parenthèse, la valeur de résistance électrique pour un sous-système, respectivement pour l'ensemble des éléments résistifs. La valeur seuil de détection de rapport cyclique PWM _(sub)system_lim est déterminée à l'étape E5 en fonction de la valeur de résistance électrique du nombre prédéfini d'éléments résistifs R_(sub)system calculée à l'étape E4 et éventuellement également de la tension d'alimentation U_battery mesurée à l'étape E1.

On peut réaliser cette détermination pour un ou plusieurs sous-systèmes, c'est-à-dire pour un ou plusieurs ensembles de modules chauffants commandés par un ou plusieurs transistors, ou pour tout le système c'est-à-dire l'ensemble des éléments résistifs pour tous les modules chauffants.

À l'étape E6, la valeur du rapport cyclique PWM_(sub)system relevée à l'étape E3 est comparée à la valeur seuil de détection PWM_(sub)system_lim) ainsi déterminée à l'étape E5.

Selon une deuxième approche, un ou le paramètre peut être la puissance électrique du nombre prédéfini d'éléments résistifs. Cette deuxième approche peut être mise en œuvre en variante ou en complément de la première approche.

Seules les différences par rapport à la première approche sont détaillées ci-après. On peut calculer à l'étape E4 une valeur de puissance électrique du nombre prédéfini d'éléments résistifs P_system ; P_subsystem à partir de la tension d'alimentation (U_battery) et de l'intensité du courant électrique i_system_max ; i_subsystem_max mesurées. Pour cette deuxième approche, le rapport cyclique relevé à l'étape E3 est également pris en compte pour le calcul de la puissance électrique à l'étape E4. En particulier, la puissance électrique peut être calculée en faisant le produit de l'intensité de courant électrique instantané, de la tension d'alimentation et du rapport cyclique.

Dans la suite de la description, on désigne par P_(sub)system avec « sub » entre parenthèse, la valeur de puissance électrique pour un sous-système, respectivement pour l'ensemble des éléments résistifs.

La valeur seuil de détection de rapport cyclique PWM _(sub)system_lim peut être déterminée à l'étape E5 en fonction de cette valeur de puissance électrique du nombre prédéfini d'éléments résistifs P_(sub)system calculée à l'étape E4 et éventuellement de la tension d'alimentation U_battery mesurée à l'étape E1.

À l'étape E6, la valeur du rapport cyclique PWM_(sub)system relevée à l'étape E3 est comparée à la valeur seuil de détection PWM_(sub)system_lim) ainsi déterminée à l'étape E5.

Selon encore une troisième approche, un ou le paramètre peut être l'intensité du courant électrique parcourant le nombre prédéfini d'éléments résistifs. Cette troisième approche peut être mise en œuvre en variante ou en complément de la première approche et/ou de la deuxième approche.

Cette troisième approche (non représentée sur les figures) diffère de la deuxième approche par le fait qu'il n'y a pas d'étape E4 de calcul mais la valeur du paramètre est mesurée à l'étape E2. La valeur seuil de détection de rapport cyclique PWM_(sub)system_lim peut être déterminée à l'étape E5 en fonction de la valeur de l'intensité i_system_max ou i_subsystem_max mesurée à l'étape E2 et éventuellement de la tension d'alimentation U_battery mesurée à l'étape E1.

À l'étape E6, la valeur du rapport cyclique PWM_(sub)system relevée à l'étape E3 est comparée à la valeur seuil de détection PWM_(sub)system_lim) ainsi déterminée à l'étape E5.

Le paramètre peut encore être un multiple ou une puissance de l'intensité du courant électrique parcourant le nombre prédéfini d'éléments résistifs. On peut citer de façon non exhaustive le carré ou le cube de l'intensité du courant électrique, le double de l'intensité du courant électrique ou encore le rapport de l'intensité du courant électrique sur le rapport cyclique du signal de pilotage par modulation de largeur d'impulsions.

Enfin, selon encore une autre approche, lorsque le paramètre n'est pas fonction de l'intensité du courant électrique, tel que par exemple de la température des éléments résistifs, la valeur d'un tel paramètre peut par exemple être mesurée.

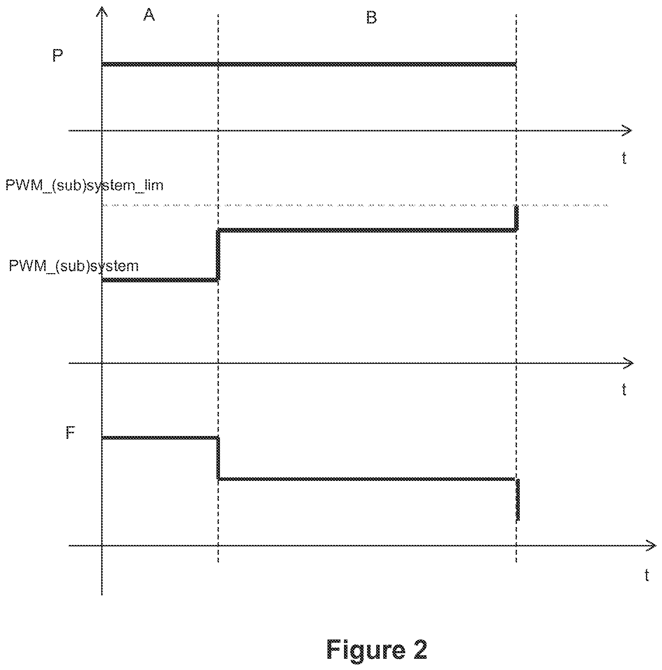

Le principe général d'un tel procédé est schématisé de façon simplifiée sur la figure 2. Sur ce graphe, sont illustrées différentes phases de fonctionnement du dispositif de chauffage électrique comportant un nombre prédéfini de modules chauffants comportant chacun des éléments résistifs par exemple de type à coefficient de température positif (CTP). Les courbes de la puissance électrique P, du rapport cyclique du signal de pilotage PWM_(sub)system, et du flux d'air F sont schématisées. Durant la phase A, le dispositif fonctionne sans anomalie, dans des conditions normales d'utilisation, notamment en ce qui concerne le débit d'air et la température du flux d'air. La phase B correspond à une première baisse de flux d'air comme représenté par la courbe F, cette baisse de flux d'air. Durant cette phase B, le rapport cyclique du signal de pilotage par modulation de largeur d'impulsions PWM_(sub)system augmente pour éviter une baisse de puissance, sans toutefois atteindre la valeur seuil de détection de rapport cyclique PWM _(sub)system_lim définie à l'étape E5 (en se référant également à la figure 1a ou 1b). Dans l'exemple illustré, le débit d'air n'étant pas trop bas, cette compensation permet de maintenir la puissance durant la phase B.

Le graphe illustre une deuxième baisse de flux d'air à la fin de la phase B. De nouveau, le rapport cyclique du signal de pilotage par modulation de largeur d'impulsions PWM_(sub)system augmente encore pour éviter une baisse de puissance. Le rapport cyclique ne peut pas augmenter au-delà de la valeur seuil de détection de rapport cyclique PWM_(sub)system_lim définie à l'étape E5. Lorsque le rapport cyclique atteint cette valeur seuil de détection de rapport cyclique PWM_(sub)system_lim, cela correspond à la détection d'une surchauffe du dispositif à l'étape E6. Dans cet exemple, la valeur relevée du rapport cyclique dépasse par le haut la valeur seuil de détection de rapport cyclique définie, c'est-à-dire en étant supérieure.

Par ailleurs, dans la description ci-dessus, on a indexé les étapes E0 à E6, première étape, deuxième étape, et ainsi de suite. Il s'agit d'un simple indexage pour différencier et dénommer les différentes étapes du procédé. Cette indexation n'implique pas forcément une priorité d'une étape par rapport à une autre. L'ordre de certaines étapes de ce procédé peut être interverti sans sortir du cadre de la présente description. Cette indexation n'implique pas non plus un ordre dans le temps. Certaines étapes peuvent par exemple être réalisées en même temps.

Le procédé selon l'une ou l'autre des variantes décrites précédemment peut comprendre en outre au moins une étape de vérification, dans laquelle on vérifie si un critère du dispositif de chauffage électrique est représentatif d'un état froid.

Cela peut se produire, par exemple au démarrage, notamment lorsque la résistance du dispositif de chauffage est très élevée et que la valeur du rapport cyclique est très élevée et dépasse la valeur seuil de détection. Une détection de surchauffe à ce moment, qui serait à tort, alors que le dispositif serait encore froid et le courant faible, ne laisserait pas le dispositif s'échauffer.

Le critère est par exemple la température d'un support de circuit électrique sur lequel est monté un circuit d'alimentation électrique des éléments résistifs.

Lors de l'étape de vérification, la température du support de circuit électrique est relevée, par exemple par un capteur de température, tel qu'une sonde thermique à coefficient de température négatif.

Lorsque la température relevée atteint ou dépasse un seuil prédéfini représentatif d'un échauffement minimal du dispositif de chauffage électrique, cela confirme que le dispositif est prêt à être détecter.

Dans le cas contraire, cela est représentatif d'un état froid ou d'une « sous-chauffe » du dispositif. Le procédé peut comporter une étape pour inhiber au moins l'étape de détection de surchauffe tant que le critère, tel que la température support de circuit électrique, est représentatif de cet état froid.

Dans le cas d'une sonde thermique à coefficient de température négatif, le seuil prédéfini peut être une valeur minimale en-dessous de laquelle, on ne cherche pas à détecter une surchauffe.

Ceci permet d'éviter une détection à tort ou intempestive de surchauffe.

Une telle vérification peut par exemple être réalisée à l'étape E0.

La mise en œuvre du procédé de détection de surchauffe tel que décrit précédemment peut se faire par une unité de commande. En particulier, le procédé de détection de surchauffe peut être mis en œuvre par l'unité de commande déjà prévue pour commander les modules chauffants du dispositif de chauffage électrique.

L'unité de commande est donc configurée pour surveiller une surchauffe selon le procédé de détection décrit précédemment. À cet effet, l'unité de commande comporte au moins un moyen de traitement pour mettre en œuvre les étapes du procédé décrit précédemment.

En particulier, l'unité de commande comporte un ou plusieurs moyens de traitement pour relever la consigne de puissance P_(sub)system_target, ou de température T_(sub)system_target, ou de résistance R_(sub)system_target, ou encore d'intensité de courant électrique i_(sub)system_target.

L'unité de commande comporte par exemple un capteur de mesure de tension pour mesurer ou relever la tension d'alimentation U_battery.

L'unité de commande comporte par exemple un capteur de mesure de courant pour mesurer ou relever le courant i_(sub)system_max parcourant le nombre prédéfini d'éléments résistifs voire l'ensemble des éléments résistifs.

L'unité de commande comporte par exemple un moyen de traitement pour déterminer ou relever le rapport cyclique du signal de pilotage par modulation de largeur d'impulsions du nombre prédéfini d'éléments résistifs PWM_(sub)system.

L'unité de commande peut comporter de plus un ou plusieurs moyens de calcul, par exemple pour calculer, la valeur d'au moins un paramètre fonction de l'intensité du courant électrique parcourant le nombre prédéfini d'éléments résistifs i_system_max ; i_subsystem_max pour la surveillance d'une surchauffe du dispositif de chauffage électrique lorsque ce paramètre est différent de l'intensité de courant électrique, notamment à partir de la mesure du courant i_(sub)system_max et éventuellement de la tension d'alimentation U_battery.

Les ou d'autres moyens de calcul peuvent également être configurés pour définir, une valeur seuil de détection de rapport cyclique du signal de pilotage par modulation de largeur d'impulsions du nombre prédéfini d'éléments résistifs PWM_(sub)system_lim, la valeur seuil étant représentative d'une surchauffe du dispositif de chauffage électrique et étant définie en fonction de la consigne ou d'une valeur d'au moins un paramètre fonction de l'intensité du courant électrique pour la surveillance d'une surchauffe du dispositif de chauffage électrique éventuellement précédemment calculée, ou en variante en fonction du couple de la tension d'alimentation et de la consigne ou de la valeur du paramètre.

L'unité de commande comporte par exemple au moins un comparateur pour comparer la valeur relevée dudit rapport cyclique PWM_(sub)system à la valeur seuil de détection PWM_(sub)system_lim.

L'unité de commande peut comporter un moyen de calcul ou microprocesseur pour déterminer en fonction des résultats des comparaisons s'il y a une surchauffe. Notamment le microprocesseur peut évaluer si la valeur relevée dudit rapport cyclique est supérieure ou égale à ladite valeur seuil de détection de rapport cyclique définie.

L'unité de commande peut également comporter au moins un moyen de traitement pour vérifier si un critère du dispositif de chauffage électrique est représentatif d'un état froid du dispositif.

Par exemple, on peut prévoir un capteur de température additionnel (non représenté sur les figures). L'unité de commande peut comporter ce capteur de température additionnel. Un tel capteur de température peut être placé sur la carte à circuit imprimé PCB, par exemple en étant soudé, brasé, ou collé. Il peut s'agir d'une sonde thermique à coefficient de température négatif (CTN) dont la résistance électrique diminue de façon uniforme avec la température. En alternative, il pourrait s'agir d'une sonde thermique à coefficient de température positif (CTP), dont la résistance électrique augmente fortement avec la température.

L'unité de commande peut comporter par exemple un comparateur pour comparer la température du support de circuit électrique relevée à un seuil prédéfini représentatif d'un échauffement minimal du dispositif de chauffage électrique. Tant que la température relevée n'atteint pas ce seuil prédéfini, cela est représentatif d'un état froid dudit dispositif, et l'unité de commande peut comporter un moyen de traitement pour inhiber la détection d'une surchauffe.

Ainsi, en définissant de façon proactive une valeur seuil de détection du rapport cyclique du signal de pilotage par modulation de largeur d'impulsions, le procédé selon l'invention permet de détecter en temps réel une surchauffe de façon indirecte lorsque le rapport cyclique atteint une valeur seuil de détection. Ceci permet d'éviter au dispositif de chauffage électrique d'atteindre un niveau de température tellement élevé qui même sans déclencher un incendie risquerait de dégrader certains composants alentours.

De plus, aucun capteur supplémentaire n'est nécessaire pour mettre en œuvre une surveillance de la température du dispositif de chauffage électrique.

## Revendications

1. Procédé de détection de surchauffe pour un dispositif de chauffage électrique comportant une pluralité d'éléments résistifs configurés pour être alimentés électriquement par une source de tension électrique, dans lequel l'alimentation électrique des éléments résistifs est pilotée à l'aide d'un signal de pilotage par modulation de largeur d'impulsions en fonction d'une consigne de puissance (P_(sub)system_target), ou de température (T_(sub)system_target), ou de résistance (R_(sub)system_target), ou d'intensité de courant électrique (i_(sub)system_target), ledit procédé comprenant les étapes suivantes :
- vérifier si au moins un critère dudit dispositif est représentatif d'un état froid dudit dispositif, et inhiber au moins l'étape de détection de surchauffe suivante lorsque ledit au moins un critère est représentatif d'un état froid,
- relever ladite consigne (P_(sub)system_target, T_(sub)system_target, R_(sub)system_target, i_(sub)system_target),
- relever le rapport cyclique du signal de pilotage par modulation de largeur d'impulsions du nombre prédéfini d'éléments résistifs (PWM_system ; PWM _subsystem),
- définir, une valeur seuil de détection de rapport cyclique du signal de pilotage par modulation de largeur d'impulsions du nombre prédéfini d'éléments résistifs (PWM_system_lim ; PWM_subsystem_lim), la valeur seuil de détection étant représentative d'une surchauffe du dispositif de chauffage électrique, ladite valeur seuil de détection étant définie en fonction de ladite consigne ou d'une valeur d'au moins un paramètre pour la surveillance d'une surchauffe du dispositif de chauffage électrique,
- comparer la valeur dudit rapport cyclique (PWM_system ; PWM_subsystem) relevée à la valeur seuil de détection (PWM_system_lim ; PWM_subsystem_lim), et
- détecter une surchauffe lorsque la valeur relevée dudit rapport cyclique atteint ladite valeur seuil de détection de rapport cyclique définie.

2. Procédé selon la revendication précédente, comportant une étape supplémentaire pour mesurer la valeur de l'intensité (i_system_max ; i_subsystem_max) du courant électrique parcourant un nombre prédéfini d'éléments résistifs,

3. Procédé selon la revendication 2, dans lequel ledit au moins un paramètre pour la surveillance d'une surchauffe du dispositif de chauffage électrique est fonction de l'intensité du courant électrique (i_(sub)system_max), la valeur dudit au moins un paramètre étant calculée lorsque ledit au moins un paramètre est différent de l'intensité du courant électrique.

4. Procédé selon l'une quelconque des revendications précédentes, comprenant une étape pour mesurer la tension d'alimentation (U_battery).

5. Procédé selon la revendication 4, dans lequel la valeur seuil de détection de rapport cyclique du signal de pilotage par modulation de largeur d'impulsions du nombre prédéfini d'éléments résistifs (PWM_system_lim ; PWM_subsystem_lim), est également déterminée en fonction de la tension d'alimentation (U_battery) mesurée.

6. Procédé selon l'une quelconque des revendications précédentes, dans lequel l'alimentation électrique est fonction d'une consigne de puissance (P_(sub)system_target) et dans lequel ladite valeur seuil de détection est définie en fonction de la consigne de puissance (P_(sub)system _target).

7. Procédé selon la revendication précédente, dans lequel la consigne de puissance (P_(sub)system_target) est fonction d'une consigne de température (T_(sub)system_target).

8. Procédé selon la revendication 4 prise en combinaison avec l'une quelconque des revendications précédentes, dans lequel, lorsque ledit au moins un paramètre est différent de l'intensité du courant électrique, la valeur dudit au moins un paramètre est calculée à partir de la tension d'alimentation (U_battery) mesurée et de l'intensité du courant électrique (i_system_max ; i_subsystem_max) parcourant le nombre prédéfini d'éléments résistifs mesurée.

9. Procédé selon l'une quelconque des revendications précédentes, dans lequel ledit au moins un paramètre est choisi parmi :
la résistance électrique du nombre prédéfini d'éléments résistifs (R_system ; R_subsystem),
l'intensité du courant électrique parcourant le nombre prédéfini d'éléments résistifs (i_system_max ; i_subsystem_max), un multiple ou une puissance de l'intensité du courant électrique parcourant le nombre prédéfini d'éléments résistifs (i_system_max ; i_subsystem_max), et
la puissance électrique du nombre prédéfini d'éléments résistifs (P_system ; P_subsystem).

10. Procédé selon l'une quelconque des revendications précédentes, dans lequel les éléments résistifs sont du type à coefficient de température positif ou négatif.

11. Procédé selon l'une quelconque des revendications précédentes, dans lequel l'intensité (i_system_max ; i_subsystem_max) du courant électrique mesurée est l'intensité du courant électrique instantané parcourant le nombre prédéfini d'éléments résistifs, lorsque le signal de pilotage par modulation de largeur d'impulsions est de 100%.

12. Procédé selon l'une quelconque des revendications précédentes, dans lequel :
- au moins deux sous-ensembles d'éléments résistifs distincts sont pilotés de façon indépendante par modulation de largeur d'impulsions l'alimentation électrique, et dans lequel
- pour chaque sous-système, on définit de façon indépendante une valeur seuil de détection de rapport cyclique du signal de pilotage, selon la nature et/ou le nombre des éléments résistifs du sous-ensemble.

13. Unité de commande pour un dispositif de chauffage électrique comportant une pluralité d'éléments résistifs configurés pour être alimentés électriquement par une source de tension électrique, l'unité de commande étant configurée pour générer un signal de pilotage par modulation de largeur d'impulsions de l'alimentation électrique des éléments résistifs en fonction d'une consigne de puissance (P_(sub)system_target), ou de température (T_(sub)system_target), ou de résistance (R_(sub)system_target), ou d'intensité de courant électrique (i_(sub)system_target), l'unité de commande comportant
au moins un moyen de traitement pour :
- vérifier si au moins un critère dudit dispositif est représentatif d'un état froid dudit dispositif, et inhiber au moins l'étape de détection de surchauffe suivante lorsque ledit au moins un critère est représentatif d'un état froid,
- relever ladite consigne (P_(sub)system_target, T_(sub)system_target, R_(sub)system_target, i_(sub)system_target),
- relever le rapport cyclique du signal de pilotage par modulation de largeur d'impulsions du nombre prédéfini d'éléments résistifs (PWM_system ; PWM _subsystem),
- définir, une valeur seuil de détection de rapport cyclique du signal de pilotage par modulation de largeur d'impulsions du nombre prédéfini d'éléments résistifs (PWM_system_lim ; PWM_subsystem_lim), la valeur seuil de détection étant représentative d'une surchauffe du dispositif de chauffage électrique, en fonction de ladite consigne ou d'une valeur d'au moins un paramètre pour la surveillance d'une surchauffe du dispositif de chauffage électrique,
- comparer la valeur relevée dudit rapport cyclique (PWM_system ; PWM_subsystem) à la valeur seuil de détection (PWM_system_lim ; PWM_subsystem_lim), et
- détecter une surchauffe lorsque la valeur relevée dudit rapport cyclique atteint ladite valeur seuil de rapport cyclique définie.

## Patentansprüche

1. Verfahren zur Erkennung einer Überhitzung für eine elektrische Heizvorrichtung, die eine Mehrzahl von Widerstandselementen beinhaltet, die dazu ausgestaltet sind, von einer elektrischen Spannungsquelle elektrisch versorgt zu werden, wobei die elektrische Versorgung der Widerstandselemente mithilfe eines pulsweitenmodulierten Ansteuerungssignals in Abhängigkeit von einem Sollwert einer Leistung (P_(sub)system_target) oder einer Temperatur (T_(sub)system_target) oder eines Widerstands (R_(sub)system_target) oder einer elektrischen Stromstärke (i_(sub)system_target) angesteuert wird, wobei das Verfahren die folgenden Schritte umfasst:
- Überprüfen, ob mindestens ein Kriterium der Vorrichtung für einen kalten Zustand der Vorrichtung repräsentativ ist, und Unterbinden mindestens des folgenden Schritts zur Erkennung einer Überhitzung, wenn das mindestens eine Kriterium für einen kalten Zustand repräsentativ ist,
- Erfassen des Sollwerts (P_(sub)system_target, T_(sub) system_target, R_(sub)system_target, i_(sub)system_target),
- Erfassen des Tastverhältnisses des pulsweitenmodulierten Ansteuerungssignals der vorgegebenen Anzahl von Widerstandselementen (PWM_system; PWM_subsystem),
- Festlegen eines Tastverhältnis-Erkennungsschwellenwerts des pulsweitenmodulierten Ansteuerungssignals der vorgegebenen Anzahl von Widerstandselementen (PWM_system_lim; PWM_subsystem_lim), wobei der Erkennungsschwellenwert für eine Überhitzung der elektrischen Heizvorrichtung repräsentativ ist, wobei der Erkennungsschwellenwert in Abhängigkeit von dem Sollwert oder von einem Wert mindestens eines Parameters für die Überwachung einer Überhitzung der elektrischen Heizvorrichtung festgelegt wird,
- Vergleichen des erfassten Werts des Tastverhältnisses (PWM_system; PWM_subsystem) mit dem Erkennungsschwellenwert (PWM_system_lim; PWM_subsystem_lim), und
- Erkennen einer Überhitzung, wenn der erfasste Wert des Tastverhältnisses den festgelegten Tastverhältnis-Erkennungsschwellenwert erreicht.

2. Verfahren nach dem vorhergehenden Anspruch, beinhaltend einen zusätzlichen Schritt zum Messen des Werts der Stärke (i_system _max; i_subsystem _max) des elektrischen Stroms, der durch eine vorgegebene Anzahl von Widerstandselementen fließt.

3. Verfahren nach Anspruch 2, wobei der mindestens eine Parameter für die Überwachung einer Überhitzung der elektrischen Heizvorrichtung von der Stärke des elektrischen Stroms (i_(sub)system_max) abhängig ist, wobei der Wert des mindestens einen Parameters berechnet wird, wenn der mindestens eine Parameter verschieden von der Stärke des elektrischen Stroms ist.

4. Verfahren nach einem der vorhergehenden Ansprüche, umfassend einen Schritt zum Messen der Versorgungsspannung (U_battery).

5. Verfahren nach Anspruch 4, wobei der Tastverhältnis-Erkennungsschwellenwert des pulsweitenmodulierten Ansteuerungssignals der vorgegebenen Anzahl von Widerstandselementen (PWM_system_lim; PWM_subsystem_lim) auch in Abhängigkeit von der gemessenen Versorgungsspannung (U_battery) bestimmt wird.

6. Verfahren nach einem der vorhergehenden Ansprüche, wobei die elektrische Versorgung von einem Leistungssollwert (P_(sub)system_target) abhängig ist und wobei der Erkennungsschwellenwert in Abhängigkeit von dem Leistungssollwert (P_(sub)system_target) festgelegt wird.

7. Verfahren nach dem vorhergehenden Anspruch, wobei der Leistungssollwert (P_(sub)system_target) von einem Temperatursollwert (T_(sub)system_target) abhängig ist.

8. Verfahren nach Anspruch 4 in Verbindung mit einem der vorhergehenden Ansprüche, wobei, wenn der mindestens eine Parameter verschieden von der Stärke des elektrischen Stroms ist, der Wert des mindestens einen Parameters ausgehend von der gemessenen Versorgungsspannung (U_battery) und von der gemessenen Stärke des elektrischen Stroms (i_system_max; i_subsystem_max), der durch die vorgegebene Anzahl von Widerstandselementen fließt, berechnet wird.

9. Verfahren nach einem der vorhergehenden Ansprüche, wobei der mindestens eine Parameter gewählt wird aus:
dem elektrischen Widerstand der vorgegebenen Anzahl von Widerstandselementen (R_system; R_subsystem),
der Stärke des elektrischen Stroms, der durch die vorgegebene Anzahl von Widerstandselementen fließt (i_system_max; i_subsystem_max), einem Vielfachen oder einer Leistung der Stärke des elektrischen Stroms, der durch die vorgegebene Anzahl von Widerstandselementen fließt (i_system_max; i_subsystem_max), und
der elektrischen Leistung der vorgegebenen Anzahl von Widerstandselementen (P_system; P_subsystem).

10. Verfahren nach einem der vorhergehenden Ansprüche, wobei die Widerstandselemente vom Typ mit positivem oder negativem Temperaturkoeffizienten sind.

11. Verfahren nach einem der vorhergehenden Ansprüche, wobei die gemessene Stärke (i_system_max; i_subsystem_max) des elektrischen Stroms die Stärke des momentanen elektrischen Stroms ist, der durch die vorgegebene Anzahl von Widerstandselementen fließt, wenn das pulsweitenmodulierte Ansteuerungssignal 100 % beträgt.

12. Verfahren nach einem der vorhergehenden Ansprüche, wobei:
- mindestens zwei unterschiedliche Teilmengen von Widerstandselementen im Hinblick auf die elektrische Versorgung unabhängig pulsweitenmoduliert angesteuert werden, und wobei
- für jede Teilmenge ein Tastverhältnis-Erkennungsschwellenwert des Ansteuerungssignals je nach Art und/oder Anzahl der Widerstandselemente der Teilmenge unabhängig festgelegt wird.

13. Steuerungseinheit für eine elektrische Heizvorrichtung, die eine Mehrzahl von Widerstandselementen umfasst, die dazu ausgestaltet sind, von einer elektrischen Spannungsquelle elektrisch versorgt zu werden, wobei die Steuerungseinheit dazu ausgestaltet ist, ein pulsweitenmoduliertes Ansteuerungssignal für die elektrische Versorgung der Widerstandselemente in Abhängigkeit von einem Sollwert einer Leistung (P_(sub)system_target) oder einer Temperatur (T_(sub)system_target) oder eines Widerstands (R_(sub) system_target) oder einer elektrischen Stromstärke (i_(sub)system_target) zu erzeugen, wobei die Steuerungseinheit mindestens ein Verarbeitungsmittel beinhaltet zum:
- Überprüfen, ob mindestens ein Kriterium der Vorrichtung für einen kalten Zustand der Vorrichtung repräsentativ ist, und Unterbinden mindestens des folgenden Schritts zur Erkennung einer Überhitzung, wenn das mindestens eine Kriterium für einen kalten Zustand repräsentativ ist,
- Erfassen des Sollwerts (P_(sub)system_target, T_(sub)system_target, R_(sub)system_target, i_(sub)system_target),
- Erfassen des Tastverhältnisses des pulsweitenmodulierten Ansteuerungssignals der vorgegebenen Anzahl von Widerstandselementen (PWM_system; PWM_subsystem),
- Festlegen eines Tastverhältnis-Erkennungsschwellenwerts des pulsweitenmodulierten Ansteuerungssignals der vorgegebenen Anzahl von Widerstandselementen (PWM_system_lim; PWM_subsystem_lim), wobei der Erkennungsschwellenwert für eine Überhitzung der elektrischen Heizvorrichtung repräsentativ ist, in Abhängigkeit von dem Sollwert oder von einem Wert mindestens eines Parameters für die Überwachung einer Überhitzung der elektrischen Heizvorrichtung,
- Vergleichen des erfassten Werts des Tastverhältnisses (PWM_system; PWM_subsystem) mit dem Erkennungsschwellenwert (PWM_system_lim; PWM_subsystem_lim), und
- Erkennen einer Überhitzung, wenn der erfasste Wert des Tastverhältnisses den festgelegten Tastverhältnis-Schwellenwert erreicht.

## Claims

1. Method for detecting overheating for an electrical heating device comprising a plurality of resistive elements configured to be electrically supplied by an electrical voltage source, wherein the electrical supply of the resistive elements is driven by a pulse-width modulated drive signal depending on a power setpoint (P_(sub)system_target), or a temperature setpoint (T_(sub)system_target), or a resistance setpoint (R_(sub)system_target), or a setpoint (i_(sub)system_target) for an amplitude of an electrical current, said method comprising the following steps:
- verifying whether at least one criterion of said device is representative of a cold state of said device, and inhibiting at least the following step of detecting overheating when said at least one criterion is representative of a cold state,
- noting said setpoint (P_(sub) system_target, T_(sub)system_target, R_(sub)system_target, i_(sub)system_target),
- noting the duty cycle (PWM_system; PWM_subsystem) of the pulse-width modulated drive signal of the predefined number of resistive elements,
- defining a detection threshold value (PWM_system_lim; PWM_subsystem_lim) of the duty cycle of the pulse-width modulated drive signal of the predefined number of resistive elements, the detection threshold value being representative of overheating of the electrical heating device, said detection threshold value being defined depending on said setpoint or on a value of at least one parameter for monitoring overheating of the electrical heating device,
- comparing the noted value of said duty cycle (PWM_system; PWM_subsystem) to the detection threshold value (PWM_system_lim; PWM_subsystem_lim), and
- detecting overheating when the noted value of said duty cycle reaches said defined duty-cycle detection threshold value.

2. Method according to the preceding claim, comprising an additional step of measuring the value of the amplitude (i_system_max; i_subsystem_max) of the electrical current flowing through a predefined number of resistive elements.

3. Method according to Claim 2, wherein said at least one parameter for monitoring overheating of the electrical heating device is dependent on the amplitude (i_(sub)system_max) of the electrical current, the value of said at least one parameter being computed when said at least one parameter is different from the amplitude of the electrical current.

4. Method according to any one of the preceding claims, comprising a step of measuring the supply voltage (U_battery).

5. Method according to Claim 4, wherein the detection threshold value of the duty cycle of the pulse-width modulated drive signal of the predefined number of resistive elements (PWM_system_lim; PWM_subsystem_lim) is also determined depending on the measured supply voltage (U_battery).

6. Method according to any one of the preceding claims, wherein the electrical supply is dependent on a power setpoint (P_(sub)system_target) and wherein said detection threshold value is defined depending on the power setpoint (P_(sub) system_target) .

7. Method according to the preceding claim, wherein the power setpoint (P_(sub)system_target) is dependent on a temperature setpoint (T_(sub)system_target) .

8. Method according to Claim 4 when combined with any one of the preceding claims, wherein, when said at least one parameter is different from the amplitude of the electrical current, the value of said at least one parameter is computed from the measured supply voltage (U_battery) and from the measured amplitude (i_system_max; i_subsystem_max) of the electrical current flowing through the predefined number of resistive elements.

9. Method according to any one of the preceding claims, wherein said at least one parameter is chosen from:
the electrical resistance (R_system; R_subsystem) of the predefined number of resistive elements,
the amplitude (i_system_max; i_subsystem_max) of the electrical current flowing through the predefined number of resistive elements, a multiple or a power of the amplitude (i_system_max; i_subsystem_max) of the electrical current flowing through the predefined number of resistive elements, and
the electrical power (P_system; P_subsystem) of the predefined number of resistive elements.

10. Method according to any one of the preceding claims, wherein the resistive elements are elements of positive or negative temperature coefficient.

11. Method according to any one of the preceding claims, wherein the measured amplitude (i_system_max; i_subsystem_max) of the electrical current is the amplitude of the instantaneous electrical current flowing through the predefined number of resistive elements, when the pulse-width modulated drive signal is 100%.

12. Method according to any one of the preceding claims, wherein:
- at least two separate subsets of resistive elements are controlled independently by pulse-width modulation of the electrical supply, and wherein
- for each subsystem, a detection threshold value of the duty cycle of the drive signal is independently defined, depending on the nature and/or the number of resistive elements of the subset.

13. Control unit for an electrical heating device comprising a plurality of resistive elements configured to be electrically supplied by an electrical voltage source, the control unit being configured to generate a pulse-width modulated drive signal for driving the electrical supply of the resistive elements depending on a power setpoint (P_(sub) system_target), or a temperature setpoint (T_(sub)system_target), or a resistance setpoint (R_(sub)system_target), or a setpoint (i_(sub)system_target) for an amplitude of an electrical current, the control unit comprising at least one processing means for:
- verifying whether at least one criterion of said device is representative of a cold state of said device, and inhibiting at least the following step of detecting overheating when said at least one criterion is representative of a cold state,
- noting said setpoint (P_(sub)system_target, T_(sub)system_target, R_(sub)system_target, i_(sub)system_target),
- noting the duty cycle (PWM_system; PWM_subsystem) of the pulse-width modulated drive signal of the predefined number of resistive elements,
- defining a detection threshold value (PWM_system_lim; PWM_subsystem_lim) of the duty cycle of the pulse-width modulated drive signal of the predefined number of resistive elements, the detection threshold value being representative of overheating of the electrical heating device, depending on said setpoint or on a value of at least one parameter for monitoring overheating of the electrical heating device,
- comparing the noted value (PWM_system; PWM_subsystem) of said duty cycle to the detection threshold value (PWM_system_lim; PWM_subsystem_lim), and
- detecting overheating when the noted value of said duty cycle reaches said defined duty-cycle detection threshold value.
